# EUROPÄISCHE PATENTSCHRIFT

(11) **EP 2 677 188 B1**
(45) Veröffentlichungstag und Bekanntmachung des Hinweises auf die Patenterteilung: **23.09.2015**
(21) Anmeldenummer: 13169737.7
(22) Anmeldetag: 29.05.2013
(51) Int. Cl.: F16D 23/02, F16D 23/04, B23P 15/14

(54) **Synchronring**
Synchronizer ring
Anneau de synchronisation

(30) Priorität: 20.06.2012 EP 12172704
(43) Veröffentlichungstag der Anmeldung: 25.12.2013
(73) Patentinhaber: Sulzer Friction Systems (Germany) GmbH, 28719 Bremen (DE)
(72) Erfinder: Christoffer, Ulf, 28719 Bremen (DE)
(74) Vertreter: Intellectual Property Services GmbH

(56) Entgegenhaltungen:
- EP-A1- 1 146 243
- EP-A2- 1 750 025
- DE-B3-102009 026 192

## Beschreibung

Die Erfindung betrifft einen Synchronring für eine Synchronisierung für ein schaltbares Zahnradwechselgetriebe sowie ein Schaltgetriebe für ein Fahrzeug. Des Weiteren betrifft die Erfindung eine Synchronisierung umfassend einen Synchronring für ein schaltbares Zahnradwechselgetriebe. Die Synchronisierung kann in einem Fahrzeuggetriebe eingesetzt werden. Die Erfindung betrifft auch ein Verfahren zur Herstellung eines Synchronrings.

Synchronringe dienen in einem mechanischen schaltbaren Zahnräderwechselgetriebe dazu, die während eines Gangwechsels auftretenden Relativgeschwindigkeiten zwischen Gangrad und Getriebewelle aneinander anzugleichen.

Die Getriebewelle ist über eine Zahnradverbindung mit dem entsprechenden Gangrad kraftschlüssig verbunden, sodass die Abtriebswelle mit der gewünschten Drehzahl angetrieben werden kann. Auf der Abtriebswelle ist eine Mehrzahl von Gangrädern angeordnet, welche unterschiedliche Übersetzungen aufweisen. Dementsprechend kann die Drehzahl an der Abtriebswelle entsprechend höher oder niedriger als die Drehzahl an der Antriebswelle sein. Das Umschalten von einem Gangrad auf ein anderes Gangrad soll nach Möglichkeit nicht unter Last erfolgen.

Daher werden zur Synchronisierung Synchronringe vorgesehen, um die Drehzahlen lastfrei an die gewünschte Drehzahl anzugleichen, bevor eine kraftschlüssige Verbindung zwischen Antriebsrad und Gangrad erfolgt. Hierzu greift der Zahnkranz des Synchronrings in die Schaltmuffe ein, die zur kraftschlüssigen Verbindung von Gangrad mit der Antriebswelle im eingekuppelten Zustand dient. Der Synchronring weist hierzu zumindest eine Reibfläche auf, die mit der Antriebswelle oder einem an die Antriebswelle gekoppelten Koppelungselement reibschlüssig verbindbar ist. Wenn die Reibfläche mit dem Koppelungselement in reibschlüssiger Verbindung steht, wird die Antriebsdrehzahl auf den Synchronring übertragen. Über den Zahnkranz des Synchronrings wird die Drehzahl der Schaltmuffe an die Antriebsdrehzahl angepasst. Sobald das Gangrad mit derselben Drehzahl wie die Schaltmuffe dreht, kann die Schaltmuffe mit dem Gangrad eine kraftschlüssige Verbindung eingehen und ein lastfreier Schaltvorgang kann vorgenommen werden, indem die Schaltmuffe mit dem Gangrad eine kraftschlüssige Verbindung eingeht. Die Funktionsweise eines derartigen Zahnräderwechselgetriebes ist an sich bekannt.

Zum Schutz gegen vorzeitigen Verschleiß und/oder zur Verbesserung der Reibcharakteristik ist es bekannt, die Reibflächen von Synchronringen mit einem Reibbelag zu versehen.

Ein Synchronring besteht in der Regel aus einem Grundkörper aus Metall oder einer Metalllegierung, die insbesondere Messing oder Stahl enthalten kann. Der Reibbelag kann beispielsweise Molybdän enthalten. Ein derartiger Reibbelag wird als thermische Spritzschicht auf den Grundkörper aufgetragen. Alternativ kann ein derartiger Reibbelag auch Carbon oder kohlenstoffhaltige Verbindungen enthalten. Selbstverständlich sind diese bevorzugten Ausführungsbeispiele als in keiner Weise limitierend auf die genannten Schichten zu verstehen. Jede andere Schicht, welche die Reibung zwischen den Reibflächen erhöht und die Anforderungen an Temperatur sowie Verschleißfestigkeit erfüllt, kann grundsätzlich als Reibbelag eingesetzt werden.

Aus dem Stand der Technik sind Synchronringe bekannt, die einteilig ausgestaltet sind oder auch aus mehreren Teilen bestehen können. Ein Synchronring, besteht aus mindestens einem ringförmigen Bauelement, kann insbesondere auch zweiteilig oder dreiteilig ausgeführt sein und gemäß der letztgenannten Ausführungsform einen Außenring, einen Innenring und einen zwischen dem Außenring und Innenring angeordneten Zwischenring aufweisen. Der Synchronring weist zumindest einen Indexnocken auf, der auf geeignete Weise mit einem Synchronkörper verbunden ist. Zumeist erfolgt die Indexierung durch Indexnocken am Synchronring. Bei der Herstellung von Synchronringen aus Stahlblech werden die Indexnocken, die den Synchronring mit dem Synchronkörper verbinden, aus dem Stahlblech umgebogen. In besonders engen Bauräumen ergibt sich das Problem, dass die Laschen extrem eng an den Ringkörper gebogen werden müssen. Hierdurch erhöht sich das Risiko von Brüchen.

Laschen, die sehr schmal ausgeführt sind und zusätzlich eine bestimmte Mindestlänge überschreiten, neigen beim Umbiegen zu Brüchen.

In der EP 1146243 A1 ist eine Synchronisiereinheit für Schaltkupplungen beschrieben. Die Synchronisiereinheit weist einen Synchronkörper und zumindest einen Synchronring auf. Der Synchonkörper verfügt über zwei Abschnitten aus Blech, die an ihren Enden miteinander verbunden sind und einen ringförmigen Hohlraum einschliessen. Der Synchronkörper weist Ausnehmungen in wenigstens eine Richtung auf, die mit Nocken des Synchronrings zusammen wirken.

In der EP 1750025 A2 ist eine Schaltvorrichtung mit einer Synchronisiereinheit für ein Getriebe eines Kraftfahrzeugs und ein Verfahren zum Einlegen eines Gangs beschrieben.

Aufgabe der Erfindung ist es daher, die Bruchgefahr von Laschen zu verringern.

Die Lösung der Aufgabe erfolgt durch die Merkmale gemäß unabhängigem Anspruch 1. Die abhängigen Ansprüche 2-11 beschreiben vorteilhafte Ausführungsbeispiele. Anspruch 12 ist auf eine Synchronisierung, also den Synchronring in Verbindung mit den Elementen ausgerichtet, welche die Funktion im Zahnradwechselgetriebe erfüllen. Anspruch 13 ist auf ein Zahnradwechselgetriebe ausgerichtet, welche eine Synchronisierung gemäß Anspruch 12 enthält. Anspruch 14 betrifft ein Verfahren zur Herstellung eines Synchronrings.

Ein Synchronring für eine Synchronisierung eines schaltbaren Zahnradwechselgetriebes umfasst einen Ringkörper mit einer Synchronringachse, welcher eine innere Reibfläche und eine äußere Einbaufläche aufweist, wobei die innere Reibfläche und die äußere Einbaufläche den Ringkörper als Mantelflächen begrenzen. Der Ringkörper weist eine Stirnseite und eine der Stirnseite gegenüberliegende Zahnradfläche auf. Der Synchronring hat eine Breite, welche dem kürzesten Abstand zwischen Stirnseite und Zahnradfläche entspricht. Die Mantelflächen erstrecken sich zwischen der Stirnseite und der Zahnradfläche. Der Ringkörper weist eine Verzahnung auf, welche sich von der äußeren Einbaufläche radial nach außen erstreckt. Die Verzahnung weist einen Zahnkranz auf, der sich von der Zahnradfläche über einen Teil der Breite des Ringkörpers in Richtung Stirnseite erstreckt. Erfindungsgemäss ist eine Ausnehmung auf der inneren Reibfläche des Ringkörpers angeordnet, sodass der Radius der inneren Reibfläche im Bereich der Ausnehmung grösser als der Radius der inneren Reibfläche an der Stirnseite ist. Eine Ausbuchtung ist auf der äußeren Einbaufläche vorgesehen, die in radialer Richtung über der Ausnehmung angeordnet ist. Die innere Reibfläche kann mit einer Beschichtung versehen sein, die insbesondere als Reibbelag ausgebildet sein kann. Der Reibbelag kann insbesondere eine Carbon-Beschichtung umfassen. Diese Beschichtung kann insbesondere granulierte Kohlenstoffpartikel auf einer Aramidfaserträgerschicht, eine karbonfaserverstärkte Zelluloseschicht oder ein Gewebe aus Karbonfaser enthalten. Alternativ kann auch ein Beschichtung mittels eines thermischen Spritzverfahrens aufgebracht werden, wodurch insbesondere eine poröse Molybdenschicht oder eine titanlegierte Bronzeschicht auf die Reibfläche aufbringbar sind.

Der Synchronisierung gemäß der vorliegenden Erfindung enthält somit eine Indexierung zur verdrehsicheren Führung des Synchronrings im Synchronkörper. Die Indexierung ist durch die Ausnehmung oder die Mehrzahl von Ausnehmungen gebildet, die auf der inneren Reibfläche des Ringkörpers des Synchronrings angeordnet sind. Ein großer Vorteil der erfindungsgemässen Ausnehmung sowie der korrespondierenden Ausbuchtung ist somit dadurch gegeben, dass die Kombination von Ausbuchtung und Ausnehmung eine Mehrzahl von Funktionen erfüllen kann. Sie kann z.B. der verdrehsichere Führung der Synchronisierung im Synchronkörper dienen und/ oder als Angriffspunkt der Vorsynchronisierungselemente.

Des Weiteren ist es von Vorteil, dass sowohl die Ausbuchtung als auch die Ausnehmung in einem einzigen Arbeitsschritt aus dem tiefgezogenen oder umgeformten Ringkörper hergestellt werden können. Die Indexnocken werden nicht als Laschen ausgebildet, die umgebogen werden, sondern es wird eine Indexierung vorgesehen, die aus dem Ringkörper herausgeformt wird.

Vorteilhafterweise können eine Mehrzahl an Ausnehmungen und/oder Ausbuchtungen am Umfang der inneren Reibfläche bzw. der äußeren Einbaufläche angeordnet sein. Insbesondere können die Ausnehmungen und/oder Ausbuchtungen in gleichem Abstand zueinander angeordnet sein, beispielsweise können vier Ausnehmungen und/oder Ausbuchtungen jeweils in einem Winkel von 90° zueinander angeordnet sein. Hierdurch wird eine Schrägstellung der Synchronisierung relativ zur Schaltmuffe vermieden und ein präziser Synchronisiervorgang gewährleistet.

Nach einem Ausführungsbeispiel weist die Ausnehmung oder jede der Ausnehmungen eine maximale Längsabmessung auf, die weniger als 10% des Umfangs der inneren Reibfläche an der Stirnseite beträgt. Je geringer der flächenmässige Anteil der Ausnehmung an der inneren Reibfläche ist, desto weniger Reibfläche geht verloren. Des Weiteren ist die durch die Ausnehmung bedingte Verschwächung des Synchronrings geringer, das heißt die Festigkeitskennwerte des Synchronrings werden insbesondere durch die verminderte Kerbwirkung weniger stark vermindert, als bei einer Ausnehmung mit Abmessungen, die mehr als 10 % der inneren Reibfläche betragen.

Für einen Synchronring für Synchronisierung mit kleinen Indexierungen kann die Ausformung, also die Ausnehmung mit der zugehörigen Ausbuchtung derart ausgestaltet sein, dass der Zahnkranz sich über den gesamten Umfang des Synchronrings erstrecken kann. Der Zahnkranz ist in diesem Fall nicht unterbrochen.

Für einen Synchronring für eine Synchronisierung mit einer größeren Indexierung muss während der Verformung mehr Material bewegt werden. In diesem Fall können die Indexierungen im flachen Zustand vorgeformt werden. Der Synchronring wird aus einem Rohling hergestellt, der als ringförmige Scheibe ausgestaltet ist. In einem ersten Verfahrensschritt wird diese Scheibe derart verformt, dass ein topfförmiges Zwischenprodukt entsteht. Dieser Verformungsschritt kann vorteilhafterweise durch Tiefziehen oder Umformen erfolgen. Aus dem topfförmigen Zwischenprodukt wird durch einen nachfolgenden Vorgang die endgültige Form des Synchronrings festgelegt. In diesem Fall ist der Zahnkranz unterbrochen.

Nach einem Ausführungsbeispiel ist zumindest die innere Reibfläche zumindest abschnittsweise konisch ausgebildet. Insbesondere beträgt der Neigungswinkel der konischen inneren Reibfläche zur Synchronringachse bis zu 60°. Durch eine konische innere Reibfläche kann das Andocken und Wegbewegen des Synchronrings von der entsprechenden Reibfläche des Gangrades vereinfacht werden. Insbesondere kann durch die konische Ausgestaltung der inneren Reibfläche eine Blockierung des Synchronrings in der entsprechenden Position vermieden werden, das heißt, die Verbindung kann jederzeit gekoppelt und wieder entkoppelt werden. Bezüglich des Neigungswinkels kann dieser weitgehend frei an die entsprechenden Einbaugegebenheiten angepasst werden.

Nach weiteren Ausführungsbeispielen, die sich als vorteilhaft erwiesen haben, kann der Synchronring mehrteilig ausgebildet sein. Insbesondere weist der Synchronring einen Außenring, einen Zwischenring und einen Innenring auf. Der Zwischenring weist eine äußere Reibfläche und eine innere Reibfläche auf. Die äußere Reibfläche ist der Reibfläche des Außenrings zugewendet und die innere Reibfläche ist der Reibfläche des Innenrings zugewendet. Die Verwendung eines mehrteiligen Synchronrings bietet insbesondere den Vorteil, dass die Gesamtoberfläche der in Reibungskontakt zueinander stehenden Reibflächen erhöht werden kann.

Nach einem Ausführungsbeispiel kann der Ringkörper aus einem Stahlblech geformt sein. Neben den durch die Verwendung eines Stahlblechs verbundenen Kostenvorteilen ist auch die Verarbeitung eines Stahlblechs im Tiefzieh- bzw. Umformverfahren durch die duktilen Eigenschaften des Stahls einfach und kostengünstig möglich.

Auch der Umform- oder Tiefziehvorgang zur Herstellung der Ausnehmung und der Ausbuchtung ist einfach durchführbar, sodass es insbesondere bei Verwendung eines Stahlblechs möglich ist, den Umformvorgang in einem einzigen Arbeitsschritt durchzuführen. Insbesondere kann die Wandstärke der Ausbuchtung im Wesentlichen der Wandstärke des Ringkörpers entsprechen.

Nach einem Ausführungsbeispiel ist die Wandstärke der Ausbuchtung maximal doppelt so groß wie die maximale Tiefe der Ausnehmung gemessen in radialer Richtung. In diesem Fall ist nur ein einziger Arbeitsschritt zur Herstellung der Ausbuchtung sowie der Ausnehmung erforderlich. Insbesondere können Ausbuchtung und Ausnehmung in ein und demselben Arbeitsschritt hergestellt werden. Die plastische Verformung des Ringkörpers bedingt ein lokales Einbringen von Zugspannungen in den Umlenkungsbereichen. Diese Vorspannung kann im Einbauzustand von Vorteil sein, wenn auf die Ausbuchtung eine radial wirkende Druckkraft einwirkt.

Die Ausnehmung und/oder Ausbuchtung kann sich über die gesamte Breite des Ringkörpers erstrecken. Insbesondere für dieses Ausführungsbeispiel kann der Zahnkranz im Bereich der Ausnehmung und/oder Ausbuchtung unterbrochen sein. Hierdurch ist eine ungehinderte Ausbildung der Ausnehmung und /oder Ausbuchtung möglich, wenn der Umformvorgang durchgeführt wird. Selbstverständlich kann der Zahnkranz auch unterbrochen sein, wenn die Ausnehmung und/oder Ausbuchtung nicht durchgehend über die gesamte Breite des Ringkörpers ausgebildet ist. Denn nach einem alternativen Ausführungsbeispiel kann sich die Ausnehmung und/oder die Ausbuchtung über einen Teil der Breite des Synchronrings erstrecken.

Die vorliegende Erfindung ermöglicht somit eine sogenannte "drop-in" Lösung für den Synchronring, auch wenn nur ein sehr begrenzter Bauraum zur Verfügung steht. Eine sogenannte "drop-in" Lösung ist **dadurch** gekennzeichnet, **dass** ein vorhandener Synchronring ohne irgendwelche Änderungen der umliegenden Bauteile durch das neue Bauteil ersetzt werden kann.

Die Bruchgefahr bei schmalen und/oder langen Laschen kann vermieden werden. Daher besteht die Möglichkeit schmale und/oder lange Laschen zu realisieren, für die keine Bruchgefahr besteht. In den Ausnehmungen oder Nuten können einzelne Segmente verliersicher geführt werden, wenn der Synchronring in Segmentbauweise ausgeführt ist.

Die Erfindung betrifft ferner eine Synchronisierung, welche einen Synchronring nach einem der vorhergehenden Ausführungsbeispiele sowie einen Synchronkörper umfasst. Der Synchronring ist in einem Aufnahmeelement des Synchronkörpers derart aufnehmbar, dass die Ausbuchtung oder Ausnehmung des Ringkörpers des Synchronrings in das Aufnahmeelement eingreift, sodass der Synchronring mit dem Synchronkörper gekoppelt ist.

Die Erfindung betrifft ferner ein Fahrzeuggetriebe, umfassend eine Synchronisierung nach einem der vorhergehenden Ausführungsbeispiele, welche zumindest einen Synchronring nach einem der vorhergehenden Ausführungsbeispiele enthält.

Ferner betrifft die Erfindung ein Verfahren zur Synchronisation eines mehrstufigen schaltbaren Zahnradwechselgetriebes, umfassend eine Antriebswelle, einem mit der Antriebswelle drehfest verbundenen Antriebswellenzahnrad, einer Abtriebswelle sowie einer Mehrzahl von Gangrädern, die auf der Abtriebswelle angeordnet sind, sowie eine Synchronisierung zur kraftschlüssigen Verbindung der Antriebswelle mit der Abtriebswelle über das Antriebswellenzahnrad und je eines der Gangräder. Die Drehzahl des Antriebswellenzahnrads wird mit der Drehzahl des Gangrads derart synchronisiert, dass die Koppelung des Antriebswellenzahnrads mit dem Gangrad über die Synchronisierung kraftlos erfolgt. In einem ersten Schritt kann eine Vorsynchronisation erfolgen. Während der Vorsynchronisation wird die Schaltmuffe mit dem Vorsynchronelement und/oder dem Synchronkörper und dem Synchronring in Eingriff gebracht, dass der Synchronring drehfest mit dem Synchronkörper und/oder dem Vorsynchronelement verbunden ist. Der Synchronring ist in einem Aufnahmeelement des Synchronkörpers derart aufnehmbar, dass die Ausbuchtung oder Ausnehmung des Ringkörpers des Synchronrings in das Aufnahmeelement eingreift, sodass der Synchronring mit dem Synchronkörper gekoppelt ist und derart der Synchronring mit der Drehzahl der Schaltmuffe antreibbar ist. Der Synchronring ist über zumindest eine Reibfläche reibschlüssig mit einem Kopplungselement des Gangrads verbunden. In einem zweiten Schritt erfolgt die Synchronisation. Durch die Bewegung der Schaltmuffe ist das Gangrad über die Reibfläche und das Kopplungselement antreibbar sodass über die Reibwirkung der Reibfläche eine Angleichung der Drehzahl des Gangrades an die Drehzahl der Antriebswelle und des Antriebswellenzahnrads erfolgt und bei Gleichlauf die Schaltmuffe derart in axialer Richtung verschoben wird, dass die Verzahnung des Synchronrings mit der entsprechenden Verzahnung des Gangrades über eine Innenverzahnung der Schaltmuffe in Eingriff gebracht wird, sodass eine formschlüssige Verbindung zwischen Gangrad und dem über die Schaltmuffe antreibbaren Antriebswellenzahnrad erfolgt, um eine Kraftübertragung von dem Antriebswellenzahnrad zum Gangrad zu ermöglichen.

Das Vorsynchronelement kann beispielsweise aus einer Mehrzahl von Gleitsteinen und zumindest einem Federelement ausgebildet sein. Bevorzugt werden als Federelement zumindest zwei Ringfedern eingesetzt. Insbesondere kann der Synchronring über die Ausbuchtung oder Ausnehmung mit dem Vorsynchronelement gekoppelt sein, sodass der Synchronring gemeinsam mit dem Vorsynchronelement bewegbar ist.

Das Verfahren zur Herstellung eines Synchronrings umfasst die Schritte des Formens eines topfförmigen Ringkörpers durch Tiefziehen oder Umformen und die Umformung zumindest eines Teils des Ringkörpers zu einer Ausnehmung und einer korrespondierenden Ausbuchtung.

Nachfolgend wird die Erfindung anhand der beiliegenden Zeichnung näher erläutert.

Es zeigen
Fig. 1a eine Ansicht eines Synchronring gemäß eines ersten Ausführungsbeispiels
Fig. 1b ein Detail der Außenseite des Synchronrings gemäß Fig. 1a
Fig. 1c ein Detail der Innenseite des Synchronrings gemäß Fig. 1a
Fig. 2a eine Ansicht eines Synchronring gemäß eines zweiten Ausführungsbeispiels
Fig. 2b ein Detail der Außenseite des Synchronrings gemäß Fig. 2a
Fig. 2c ein Detail der Innenseite des Synchronrings gemäß Fig. 2a
Fig. 3 einen Schnitt durch eine Anordnung eines Synchronrings in einer Synchronisierung nach dem Stand der Technik
Fig. 4 eine Synchronisierung gemäß der Erfindung
Fig. 5 einen Schnitt durch eine erfindungsgemässe Synchronisierung nach dem Ausführungsbeispiel einer Mehrkonussynchronisierung
Fig. 6 einen Schnitt durch eine erfindungsgemässe Synchronisierung nach dem Ausführungsbeispiel einer Einfachkonussynchronisierung

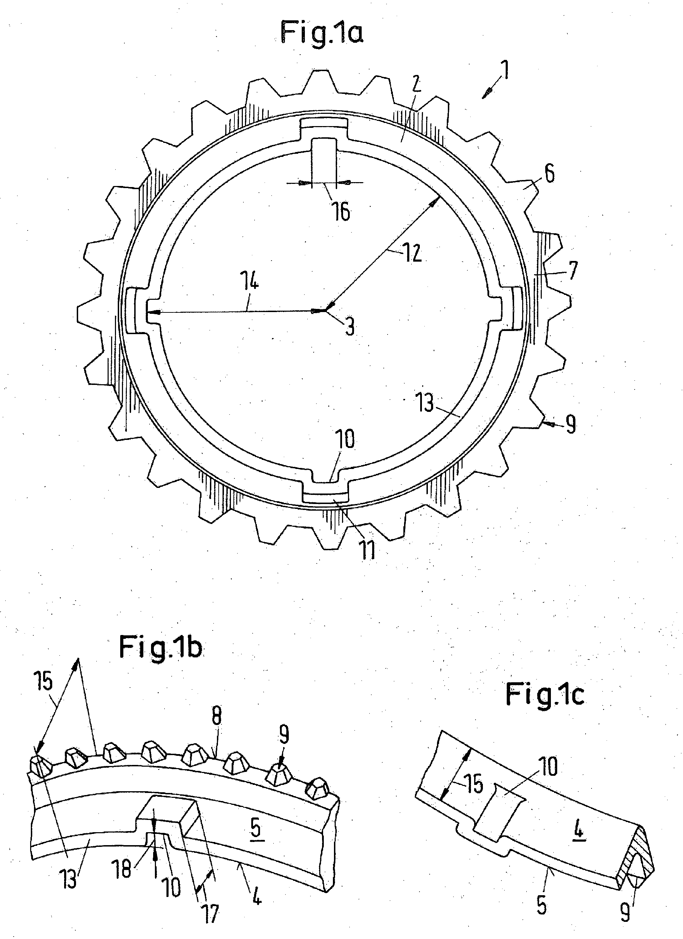

Der Synchronring 1 gemäß Fig. 1a für eine Synchronisierung eines schaltbaren Zahnradwechselgetriebes weist einen Ringkörper 2 auf. Der Ringkörper ist um eine Synchronringachse 3 angeordnet. Der Ringkörper weist eine innere Reibfläche 4 und eine äußere Einbaufläche 5 auf. Die innere Reibfläche 4 und die äußere Einbaufläche 5 begrenzen den Ringkörper 2 in einer radialen Umfangsrichtung. Der Ringkörper 2 weist eine Verzahnung 6 auf, welche sich von einem an einem Ende des Ringkörpers befindlichen, umlaufenden Zahnradbasisleiste 7 in radialer Richtung erstreckt. Die Zahnradbasisleiste 7 ist in axialer Richtung von einer sich im Wesentlichen senkrecht zur Synchronringachse erstreckenden Zahnradfläche 8 begrenzt. Die Zahnradbasisleiste 7 trägt die Zähne der Verzahnung 6. Auf der inneren Reibfläche 4 des Ringkörpers 2 ist eine Ausnehmung 10 angeordnet, sodass der Radius 14 der inneren Reibfläche 4 an der Stirnseite 13 im Bereich der Ausnehmung 10 grösser als der Radius 12 der inneren Reibfläche 4 ist.

Die Ausnehmung 10 hat eine im Wesentlichen rechteckige Querschnittsfläche. Die Längsseiten des Rechtecks erstrecken sich im Wesentlichen parallel zur Synchronringachse 3. Alternativ besteht die Möglichkeit, dass die Ausnehmung trapezförmig ausgestaltet ist, was in den Figuren nicht zeichnerisch dargestellt ist. Die Basis des Trapezes liegt an der Stirnseite 13.

Die Ausnehmung 10 erstreckt sich gemäß Fig. 1a, Fig. 1 b oder Fig. 1 c über einen Teil der Breite des Synchronrings. Die Breite ist als die Abmessung definiert, die zwischen der Stirnseite 13 und der Zahnradfläche 8 gemessen wird und sich parallel zu der Synchronringachse erstreckt. Eine Ausbuchtung 11 ist auf der äußeren Einbaufläche 5 vorgesehen, die in radialer Richtung oberhalb der Ausnehmung 10 angeordnet ist.

Der Synchronring 1 wird vorteilhafterweise durch Tiefziehen oder Umformen hergestellt, insbesondere der Ringkörper. Die Ausnehmung 10 und/oder Ausbuchtung 11 kann in einem weiteren Arbeitsschritt durch einen Umform- oder Tiefziehvorgang hergestellt werden. Insbesondere wenn die Wandstärke der Ausbuchtung 11 maximal doppelt so groß wie die maximale Tiefe 18 der Ausnehmung 10 gemessen in radialer Richtung ist, kann die Ausnehmung 10 und die Ausbuchtung 11 in einem einzigen Arbeitsschritt hergestellt werden.

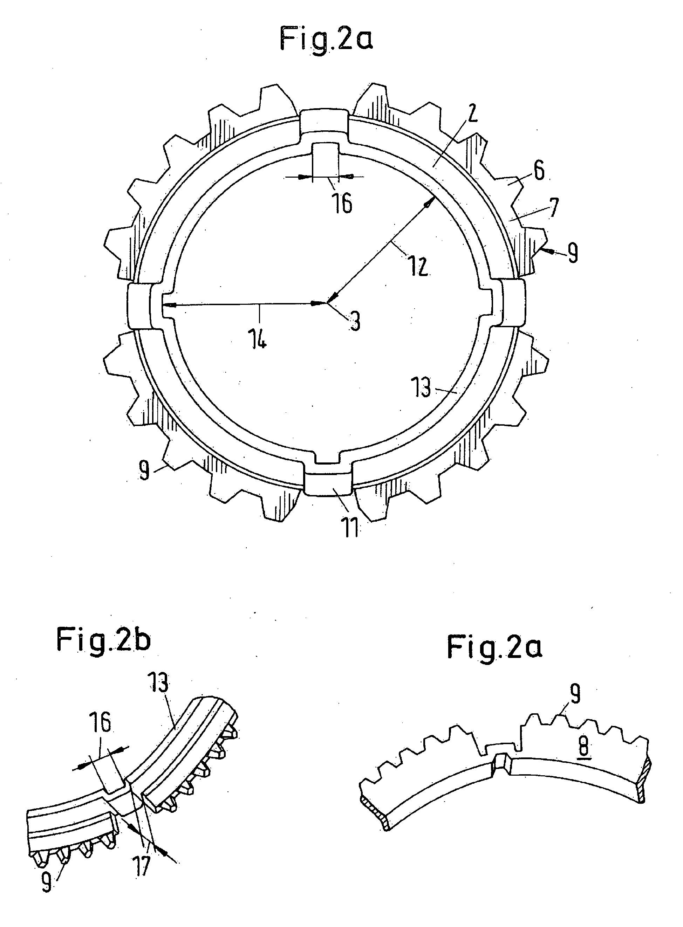

Das Ausführungsbeispiel gemäß Fig. 2a, 2b und 2c unterscheidet sich von dem Ausführungsbeispiel gemäß Fig. 1a, 1b, 1c dergestalt, dass die Ausnehmung 10 und die zugehörige Ausbuchtung 11 sich über die gesamte Breite des Ringkörpers 2 erstrecken. Des Weiteren unterscheidet sich dieses Ausführungsbeispiel dahingehend, dass der Zahnkranz 9 im Bereich der Ausbuchtung 11 unterbrochen ist.

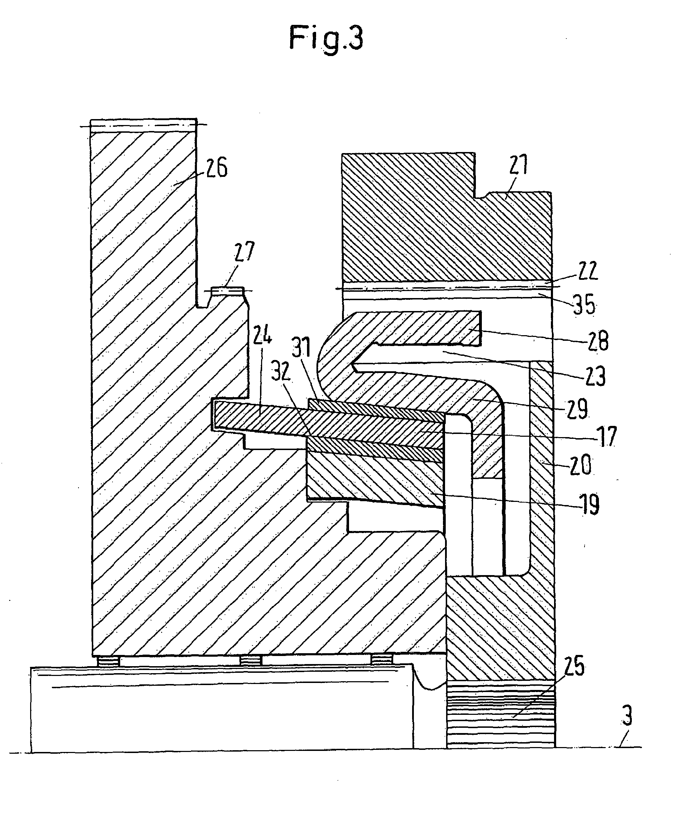

Fig. 3 zeigt ein Zahnradwechselgetriebe umfassend eine Synchronisierung nach dem Stand der Technik, welche einen mehrteiligen Synchronring 1 aufweist sowie eine Schaltmuffe 21 welche entlang der Synchronringachse 3 verschiebbar ist. Der Synchronring ist in einem Aufnahmeelement 23 des Synchronkörpers 20 derart aufnehmbar, dass die Ausbuchtung 11 oder Ausnehmung 10 des Ringkörpers 2 des Synchronrings 1 in das Aufnahmeelement 23 eingreift, sodass der Synchronring 1 mit dem Synchronkörper 20 gekoppelt ist.

Die Schaltmuffe 21 weist eine Innenverzahnung 22 auf, in welche ein Vorsynchronelement eingreift (nicht dargestellt), sowie der Synchronring 1 mit einer hier nicht dargestellten Verzahnung, da der Schnitt an einer Stelle des Synchronrings 1 gelegt ist, an welcher die Verzahnung unterbrochen ist.

Der Synchronring gemäß Fig. 3 ist aus einem Außenring 29, einem Innenring 19 und einem zwischen dem Außenring 29 und Innenring 19 angeordneten Zwischenring 17 aufgebaut. Zwischen dem Außenring 29 und dem Zwischenring 17 ist ein äußeres Reibelement 31 angeordnet. Zwischen dem Zwischenring 17 und dem Innenring 19 ist ein inneres Reibelement 32 angeordnet.

Diese herkömmliche Mehrfachkonussynchronisierung weist somit einen Synchronring mit einem Außenring 29 auf, der mit einer umgebogenen Lasche 28 in ein Aufnahmeelement 23 des Synchronkörpers 20 eingreift. Der Zwischenring 17 greift mit einem Kopplungselement 24, insbesondere einer Lasche in das Gangrad 26 ein. Der Innenring 19 ist ebenfalls über nicht dargestellte Laschen mit dem Außenring 29 gekoppelt, sodass sich der Innenring 19 gemeinsam mit dem Außenring 29 dreht. Der Außenring 29 des Synchronrings 1 ist somit mit dem Synchronkörper 20 verdrehsicher gekoppelt. Der Synchronkörper 20 ist wiederum drehfest mit der Abtriebswelle 25 verbunden. Der Synchronkörper kann ein Vorsynchronelement enthalten, welches über Federelemente, die insbesondere als Ringfederelemente ausgebildet sind, in ihrer radialen Position gehalten werden können. Das Vorsynchronelement kann insbesondere als eine Mehrzahl von Gleitsteinen ausgebildet sein. Es ist auch möglich, dass der Synchronring 29 zumindest teilweise in dem Vorsynchronelement aufgenommen ist, was in den Zeichnungen nicht dargestellt ist.

In der in Fig. 3 dargestellten Lage dreht sich der Synchronkörper 20, der damit gekoppelte Synchronring 1, das heißt, dessen Außenring 29 und dessen Innenring 10 mit der Drehzahl der Abtriebswelle. Über das äußere Reibelement 31 und das innere Reibelement 32 besteht eine reibschlüssige Verbindung mit dem Zwischenring 17. Der Zwischenring 17 ist mit einem Kopplungselement 24 ausgestattet, welches mit dem Gangrad 26 in Eingriff steht. Das Gangrad 26 wird somit über das Kopplungselement mit dem Synchronring 1 mitbewegt. Wenn Synchronkörper 20 und Gangrad 26 mit gleicher Drehzahl laufen, kann die Schaltmuffe 21 mit einem nicht dargestellten Manipulationselement derart verschoben werden, dass deren Innenverzahnung 22 mit einer am Gangrad 26 angebrachten Verzahnung 27 des Kopplungskörpers des Gangrads in Eingriff gebracht werden. In dieser Position stehen sowohl die Verzahnung des Außenrings 29 des Synchronrings 1 als auch die Verzahnung 27 des Gangrades mit der Innenverzahnung 22 der Schaltmuffe 21 im Eingriff, sodass sich eine kraftschlüssige Verbindung vom Gangrad 16 über dessen Verzahnung 27, die Verzahnung 6 des Außenrings 29 mit der Innenverzahnung 22 der Schaltmuffe 21 ergibt, wodurch die Abtriebswelle 25 mit dem Gangrad 26 gekoppelt wird. Das heißt, dass in dieser Position eine Kraft von der Antriebswelle auf das das Gangrad 26 übertragen werden kann.

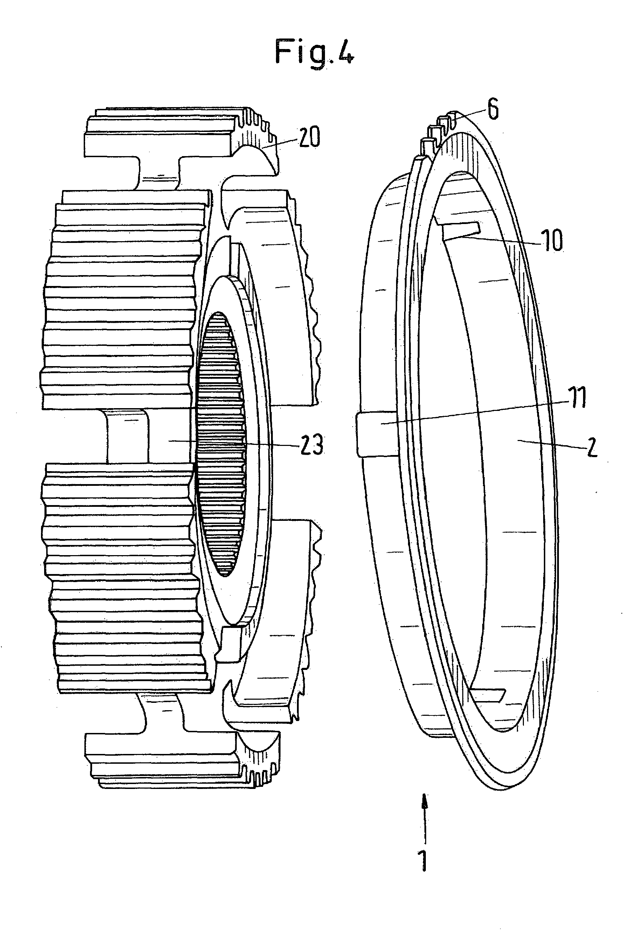

Fig. 4 zeigt einen Synchronkörper 20 sowie einen Synchronring 1 gemäß einem Ausführungsbeispiel der vorliegenden Erfindung. Die Ausbuchtung 11 greift in eine korrespondierende Ausnehmung 23 des Synchronkörpers 20 ein, sodass der Synchronring mit dem Synchronkörper 20 im Eingriff steht. Die Ausbuchtung 11 und/oder Ausnehmung 10 befinden sich am Ringkörper 2 des Synchronrings 1, sodass bei einer Kraftübertragung während des Synchronisiervorgangs über die Ausnehmung und/oder Ausbuchtung der Ringkörper 2 bzw. mit dem Synchronkörper 20 derart mitbewegt wird, dass deren Drehzahlen übereinstimmen. Lokale Spannungsspitzen, die zum Versagen der Lasche 28 gemäß des Ausführungsbeispiels des Standes der Technik werden somit durch das Vorsehen einer Verbindung zwischen Synchronring 1 und Synchronkörper 10 über die Ausbuchtung 11 und/oder der Ausnehmung 10, die in ein Aufnahmeelement 23 des Synchronkörpers 20 eingreifen, vermieden.

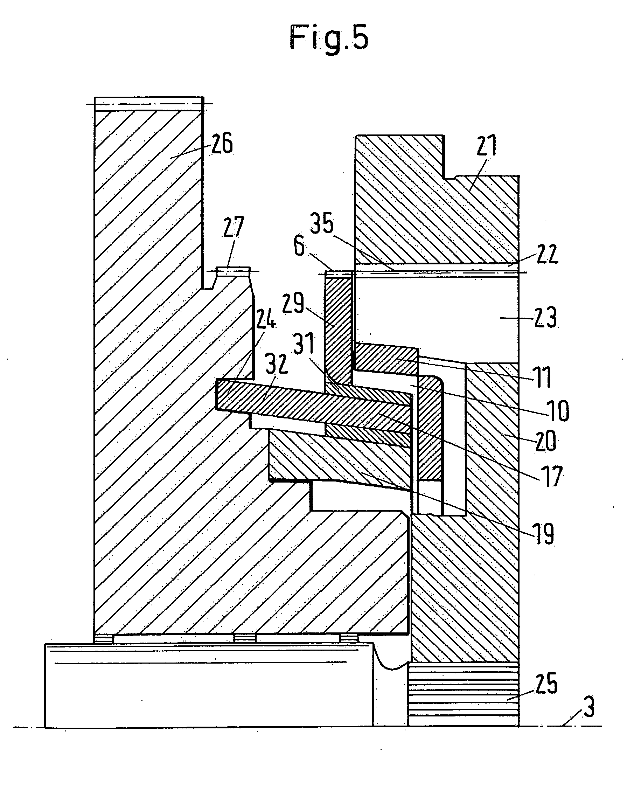

Selbstverständlich kann der dargestellte Synchronring 1 als ein Außenring 29 eines mehrteiligen Synchronrings ausgestaltet sein, was in Fig. 5 dargestellt ist. Fig. 5 zeigt somit die Anordnung des Synchronrings eines Zahnradwechselgetriebes, welches dieselben Bauteile wie in Fig. 3 aufweist und auf deren Funktion nicht mehr eingegangen werden soll. Der Synchronring 29 ist in dem Synchronkörper 20 aufgenommen. Der Synchronring 29 weist eine Verzahnung 6 auf. Auch der Synchronkörper 20 weist eine Außenverzahnung 35 auf, die im Eingriff mit der Innenverzahnung 22 der Schaltmuffe 21 steht. Die Ausbuchtung 11 des Synchronrings 29 ist im Aufnahmeelement 23 des Synchronkörpers aufgenommen. Wie in Fig. 4 dargestellt ist, können eine Mehrzahl derartiger Ausbuchtungen am Umfang der sich zwischen innerer Reibfläche und äußerer Einbaufläche des Synchronrings 29 angeordnet sein. Hierbei entspricht die Konfiguration des Synchronrings 29 für diese Merkmale der Darstellung für den Synchronring 1 gemäß einer der Fig.1a, 1b, 1c, 2a, 2b, 2c.

Das Verfahren zur Synchronisation eines mehrstufigen schaltbaren Zahnradwechselgetriebes umfasst die nachfolgenden Schritte. Das Zahnradwechselgetriebe enthält eine Antriebswelle, ein mit der Antriebswelle drehfest verbundenes Antriebswellenzahnrad, eine Abtriebswelle 25 sowie eine Mehrzahl von Gangrädern 26, die auf der Abtriebswelle angeordnet sind, sowie eine Schaltmuffe zur kraftschlüssigen Verbindung der Antriebswelle mit der Abtriebswelle über das Antriebswellenzahnrad und je eines der Gangräder. Fig. 5 zeigt nur eines der Gangräder. Der Synchronring 1 ist in einem Aufnahmeelement 23 des Synchronkörpers 20 derart aufnehmbar, dass die Ausbuchtung 11 oder Ausnehmung 10 des Ringkörpers 2 des Synchronrings 1 in das Aufnahmeelement 23 eingreift. Der Synchronring 1 ist mit dem Synchronkörper 20 gekoppelt und derart ist der Synchronring 1 mit der Drehzahl der Schaltmuffe 21 bewegbar. Der Synchronring 1 ist über zumindest eine Reibfläche 31, 32 reibschlüssig mit einem Kopplungselement 24 des Gangrads 26 verbunden, sodass bei Bewegung der Schaltmuffe 21 das Gangrad 26 über die Reibfläche 31, 32 und das Kopplungselement 24 antreibbar ist, sodass über die Reibwirkung der Reibfläche 31, 32 eine Angleichung der Drehzahl des Gangrades an die Drehzahl der Antriebswelle und des Antriebswellenzahnrads erfolgt und bei Gleichlauf die Schaltmuffe 21 derart in axialer Richtung verschoben wird, dass die Verzahnung 6 des Synchronrings 1, 29 mit der entsprechenden Verzahnung 27 des Gangrades 26 über eine Innenverzahnung 22 der Schaltmuffe 21 in Eingriff gebracht wird, sodass eine formschlüssige Verbindung zwischen Gangrad 26 und dem über die Schaltmuffe 21 antreibbaren Antriebswellenzahnrad erfolgt, um eine Kraftübertragung von dem Antriebswellenzahnrad zum Gangrad 26 zu ermöglichen.

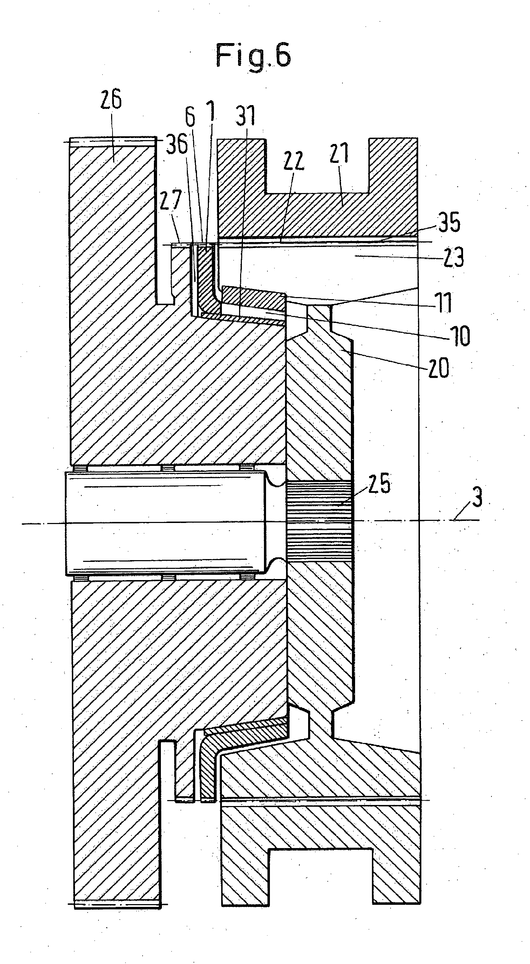

Fig.6 zeigt eine Synchronisierung nach einem weiteren Ausführungsbeispiel. Ein Gangrad 26 ist linksseitig dargestellt, welches eine Verzahnung 27 auswiest, die zur Aufnahme in eine Innenverzahnung 22 einer Schaltmuffe 21 bestimmt ist. An das Gangrad 26 schließt rechtsseitig ein Synchronring 1 an. Dieser Synchronring 1 ist einteilig ausgebildet. Zwischen dem Synchronring 1 und der konischen Auflagefläche 36 des Gangrads ist ein Reibelement 31 angeordnet, welches in seiner Funktion dem äußeren Reibelement der Fig. 5 entspricht. Der Synchronring 1 ist in einem Aufnahmeelement 23 eines Synchronkörpers 20 aufgenommen. Das Aufnahmeelement 23 ist eine Ausnehmung oder Tasche, in welcher eine Ausbuchtung 11 des Synchronrings aufgenommen ist. Der Synchronring 1 steht somit mit dem Synchronkörper 20 im Eingriff und kann die Drehbewegung des Synchronkörpers 20 mitmachen. Der Synchronkörper kann ähnlich wie in Fig. 4 ausgestaltet sein. Er weist eine Außenverzahnung 35 auf, die im eingebauten Zustand in die Innenverzahnung 22 der Schaltmuffe 21 eingreift. Wie in Fig. 4 sichtbar, ist die Außenverzahnung am Umfang des Synchronkörpers angebracht. An der Position der Aufnahmeelemente ist die diese Außenverzahnung unterbrochen.

Zwischen der Außenverzahnung 36 des Synchronkörpers und der Verzahnung 27 des Gangrads, welche denselben Durchmesser aufweisen, ist die Verzahnung 6 des Synchronrings 1 angeordnet. Die Verzahnung 6 erstreckt sich, wie in Fig. 4 sichtbar ist, über den gesamten Umfang des Synchronrings 1.

Die Schaltmuffe 21 kann über die Außenverzahnung 36 des Synchronkörpers 20 sowie die Verzahnung 6 des Synchronrings 1 und die Verzahnung 27 des Kupplungskörpers des Gangrads 26 verschoben werden. Hierbei wird die eingekoppelte Position von der ausgekoppelten Position unterschieden. In der eingekoppelten Position steht die Schaltmuffe 21 über ihre Innenverzahnung 22 im Eingriff mit Außenverzahnung 36 des Synchronkörpers 20 sowie der Verzahnung 6 des Synchronrings 1 und der Verzahnung 27 des Kupplungskörpers des Gangrades. In dieser Position ist das Gangrad eingekoppelt und eine Kraftübertragung kann von der nicht dargestellten Antriebswelle auf die Abtriebswelle 25 erfolgen. In der ausgekoppelten Position steht zumindest die Verzahnung 27 des Kupplungskörpers des Gangrads 26 nicht mehr im Eingriff mit der Innenverzahnung 22 der Schaltmuffe 21. In dieser Position kann von der Antriebswelle keine Kraft auf das Gangrad 26 übertragen werden Der Synchronring wiederum ist über die Ausbuchtung 11 mit dem Synchronkörper 20 gekoppelt. Der Synchronkörper 20 steht mit seiner Außenverzahnung 36 immer noch im Eingriff mit der Innenverzahnung 22 der Schaltmuffe 21. Soll nun von der ausgekoppelten Position in die eingekoppelte Position gewechselt werden, wird zur Synchronisation die Verzahnung 6 des Synchronrings 1 über die Innenverzahnung 22 der Schaltmuffe 21 vorwärts geschoben bis eine Reibung zwischen 31 und dem Gangradkonus aufgebaut wird. (Die Vorsynchronisierung ist in diesem Schnitt nicht dargestellt und beschrieben). Da der Synchronring 1 über das Reibelement 31 mit der konischen Auflagefläche 36 des Gangrads in Kontakt ist, wird die Drehzahl des Gangrads an die Drehzahl des Synchronkörpers angepasst. Ist die Differenzdrehzahl abgebaut, kann die Innenverzahnung 22 der Schaltmuffe 21 mit der Verzahnung 27 des Kupplungskörpers des Gangrads 26 in Eingriff gebracht werden und die Kopplung vorgenommen werden.

## Patentansprüche

1. Synchronring (1) für eine Synchronisierung eines schaltbaren Zahnradwechselgetriebes, umfassend einen Ringkörper (2) mit einer Synchronringachse (3), welcher eine innere Reibfläche (4) und eine äußere Einbaufläche (5) aufweist, wobei die innere Reibfläche (4) und die äußere Einbaufläche(5) den Ringkörper (2) als Mantelflächen begrenzen, wobei der Ringkörper eine Stirnseite (13) aufweist und eine der Stirnseite gegenüberliegende Zahnradfläche (8) aufweist, wobei der Synchronring eine Breite (15) aufweist, welche dem kürzesten Abstand zwischen Stirnseite (13) und Zahnradfläche (8) entspricht und sich die Mantelflächen zwischen der Stirnseite (13) und der Zahnradfläche (8) erstrecken, wobei der Ringkörper (2) eine Verzahnung (6) aufweist, welches sich in von der äußeren Einbaufläche (5) radial nach außen erstreckt, wobei die Verzahnung einen Zahnkranz (9) aufweist, der sich von der Zahnradfläche (8) über einen Teil der Breite (15) des Ringkörpers (2) in Richtung Stirnseite (13) erstreckt, **gekennzeichnet durch** eine Ausnehmung (10), welche auf der inneren Reibfläche (4) des Ringkörpers (2) angeordnet ist, sodass der Radius (14) der inneren Reibfläche (4) im Bereich der Ausnehmung (10) grösser als der Radius (12) der inneren Reibfläche (4) an der Stirnseite (13) ist und wobei eine Ausbuchtung (11) auf der äußeren Einbaufläche (5) vorgesehen ist, die in radialer Richtung über der Ausnehmung (10) angeordnet ist.

2. Synchronring (1) nach Anspruch 1, wobei eine Mehrzahl an Ausnehmungen (10) und/oder Ausbuchtungen (11) am Umfang der inneren Reibfläche (4) oder der äußeren Einbaufläche (5) angeordnet ist.

3. Synchronring (1) nach Anspruch 1 oder 2, wobei die Ausnehmung (10) oder jede der Ausnehmungen eine maximale Längsabmessung (16) aufweist, die weniger als 10% des Umfangs der inneren Reibfläche (4) an der Stirnseite (13) beträgt.

4. Synchronring (1) nach einem der vorhergehenden Ansprüche, wobei zumindest die innere Reibfläche (4) zumindest abschnittsweise konisch ausgebildet ist.

5. Synchronring (1) nach Anspruch 4, wobei der Neigungswinkel der konischen inneren Reibfläche (4) zur Synchronringachse (3) bis zu 60° beträgt.

6. Synchronring (1) nach einem der vorhergehenden Ansprüche, wobei der Synchronring einen Außenring, einen Zwischenring und einen Innenring aufweist, und der Zwischenring eine äußere Reibfläche und eine innere Reibfläche aufweist, und die äußere Reibfläche der Reibfläche des Außenrings zugewendet ist und die innere Reibfläche der Reibfläche des Innenrings zugewendet ist.

7. Synchronring (1) nach einem der vorhergehenden Ansprüche, wobei der Ringkörper (2) aus einem Stahlblech geformt ist.

8. Synchronring (1) nach einem der vorhergehenden Ansprüche, wobei die Wandstärke der Ausbuchtung (11) im Wesentlichen der Wandstärke des Ringkörpers (2) entspricht.

9. Synchronring (1) nach einem der vorhergehenden Ansprüche, wobei die Wandstärke der Ausbuchtung (11) maximal doppelt so groß wie die maximale Tiefe (18) der Ausnehmung (10) gemessen in radialer Richtung ist.

10. Synchronring (1) nach einem der vorhergehenden Ansprüche, wobei der Zahnkranz (9) im Bereich der Ausbuchtung (11) unterbrochen ist.

11. Synchronring (1) nach einem der vorhergehenden Ausführungsbeispiele, wobei sich die Ausnehmung und/oder die Ausbuchtung über einen Teil der Breite des Synchronrings erstreckt.

12. Synchronisierung umfassend einen Synchrönring (1) nach einem der vorhergehenden Ansprüche sowie einen Synchronkörper (20), wobei der Synchronring (1) in einem Aufnahmeelement (23) des Synchronkörpers (20) derart aufnehmbar ist, dass die Ausbuchtung (11) oder Ausnehmung (10) des Ringkörpers (2) des Synchronrings (1) in das Aufnahmeelement (23) eingreift, sodass der Synchronring (1) mit dem Synchronkörper (20) gekoppelt ist.

13. Zahnradwechselgetriebe, insbesondere Fahrzeuggetriebe, umfassend eine Synchronisierung nach Anspruch 12, enthaltend zumindest einen Synchronring (1) nach einem der Ansprüche 1 bis 11.

14. Verfahren zur Herstellung eines Synchronrings (1) nach einem der vorhergehenden Ansprüche umfassend die Schritte des Formens eines topfförmigen Ringkörpers (2) durch Tiefziehen oder Umformen, wobei eine Umformung zumindest eines Teils des Ringkörpers (2) zu einer Ausnehmung (10) und einer korrespondierenden Ausbuchtung (11) erfolgt.

## Claims

1. A synchronizer ring (1) for a synchronizer of a switchable gear changing transmission, including a ring body (2) having a synchronizer ring axis (3), which ring body has an inner friction surface (4) and an outer installation surface (5), wherein the inner friction surface (4) and the outer installation surface (5) bound the ring body (2) as jacket surfaces, wherein the ring body has an end face (13) and a gear surface (8) opposite the end face, wherein the synchronizer ring has a width (15) which corresponds to the shortest distance between the end face (13) and the gear surface (8) and the jacket surfaces extend between the end face (13) and the gear surface (8), wherein the ring body (2) has a toothed arrangement (6) which extends radially outwardly from the outer installation surface (5), wherein the toothed arrangement has a crown gear (9) which extends from the gear surface (8) via a part of the width (15) of the ring body (2) in the direction of the end face (13), **characterized by** a recess (10) which is arranged at the inner friction surface (4) of the ring body (2), so that the radius (14) of the inner friction surface (4) in the region of the recess (10) is larger than the radius (12) of the inner friction surface (4) at the end face (13), and wherein a bulge (11) is provided at the outer installation surface (5) which is arranged in the radial direction over the recess (10).

2. A synchronizer ring (1) in accordance with claim 1, wherein a plurality of recesses (10) and/or bulges (11) are arranged at the circumference of the inner friction surface (4) or of the outer installation surface (5).

3. A synchronizer ring (1) in accordance with claim 1 or claim 2, wherein the recess (10) or each of the recesses has a maximum longitudinal dimension (16) which is less than 10% of the circumference of the inner friction surface (4) at the end face (13).

4. A synchronizer ring (1) in accordance with any one of the preceding claims, wherein at least the inner friction surface (4) is, at least sectionally, of conical design.

5. A synchronizer ring (1) in accordance with claim 4, wherein the angle of inclination of the conical inner friction surface (4) with respect to the synchronizer ring axis (3) amounts to up to 60°.

6. A synchronizer ring (1) in accordance with any one of the preceding claims, wherein the synchronizer ring has an outer ring, an intermediate ring and an inner ring, and the intermediate ring has an outer friction surface and an inner friction surface, and the outer friction surface faces the friction surface of the outer ring and the inner friction surface faces the friction surface of the inner ring.

7. A synchronizer ring (1) in accordance with any one of the preceding claims, wherein the ring body (2) is formed from sheet steel.

8. A synchronizer ring (1) in accordance with any one of the preceding claims, wherein the wall thickness of the bulge (11) corresponds substantially to the wall thickness of the ring body (2).

9. A synchronizer ring (1) in accordance with any one of the preceding claims, wherein the wall thickness of the bulge (11) is at most twice as large as the maximum depth (18) of the recess (10) measured in the radial direction.

10. A synchronizer ring (1) in accordance with any one of the preceding claims, wherein the crown gear (9) is interrupted in the region of the bulge (11).

11. A synchronizer ring (1) in accordance with any one of the preceding embodiments, wherein the recess and/or the bulge extend(s) over a part of the width of the synchronizer ring.

12. A synchronizer including a synchronizer ring (1) in accordance with any one of the preceding claims, as well as including a synchronizer body (20), wherein the synchronizer ring (1) can be received in a reception element (23) of the synchronizer body (20) such that the bulge (11) or recess (10) of the ring body (2) of the synchronizer ring (1) engages into the reception element (23) so that the synchronizer ring (1) is coupled to the synchronizer body (20).

13. A gear changing transmission, in particular a vehicle transmission, including a synchronizer in accordance with claim 12 having at least one synchronizer ring (1) in accordance with any one of the claims 1 to 11.

14. A method for the manufacture of a synchronizer ring (1) in accordance with any one of the preceding claims, including the steps of forming a pot shaped ring body (2) by deep drawing or forming, wherein a forming of at least one part of the ring body (2) to a recess (10) and a corresponding bulge (11) is affected.

## Revendications

1. Anneau de synchronisation (1) pour une synchronisation d'une boîte de vitesses à roues dentées, comprenant un corps annulaire (2) avec un axe d'anneau de synchronisation (3), qui comporte une surface intérieure de friction (4) et une surface extérieure de montage (5), la surface intérieure de friction (4) et la surface extérieure de montage (5) délimitant le corps annulaire (2) comme surfaces latérales, le corps annulaire comprenant une face frontale (13) et une face d'engrenage (8) opposée à la surface frontale, l'anneau de synchronisation ayant une largeur (15) qui correspond à la distance la plus courte entre la face frontale (13) et la face d'engrenage (8), et les surfaces latérales s'étendant entre la face frontale (13) et la face d'engrenage (8), le corps annulaire (2) comprenant une denture (6) qui s'étend à partir de la surface extérieure de montage (5) radialement vers l'extérieur, la denture comprenant une couronne dentée (9) qui s'étend de la surface d'engrenage (8) sur une partie de la largeur (15) du corps annulaire (2) en direction de la face frontale (13), **caractérisé par** un évidement (10) qui est disposé sur la surface intérieure de friction (4) du corps annulaire (2) de façon que le rayon (14) de la surface intérieure de friction (4) soit plus grand dans la zone de l'évidement (10) que le rayon (12) de la surface intérieure de friction (4) du côté de la face frontale (13), et un renflement (11) étant prévu sur la surface extérieure de montage (5), qui est disposé en direction radiale au-dessus de l'évidement (10).

2. Anneau de synchronisation (1) selon la revendication 1, où une pluralité d'évidements (10) et/ou de renflements (11) sont disposés sur le pourtour de la surface intérieure de friction (4) et/ou de la surface extérieure de montage (5).

3. Anneau de synchronisation (1) selon la revendication 1 ou 2, où l'évidement (10) ou chacun des évidements présente une dimension de longueur maximale (16) qui est de moins que 10% de la périphérie de la surface intérieure de friction (4) du côté de la face frontale (13).

4. Anneau de synchronisation (1) selon l'une des revendications précédentes, où au moins la surface intérieure de friction (4) est formée, au moins par secteurs, de façon conique.

5. Anneau de synchronisation (1) selon la revendication 4, où l'angle d'inclinaison de la surface intérieure conique de friction (4) par rapport à l'axe d'anneau de synchronisation (3) est de jusqu'à 60°.

6. Anneau de synchronisation (1) selon l'une quelconque des revendications précédentes, où l'anneau de synchronisation comporte un anneau extérieur, un anneau intermédiaire et un anneau intérieur et où l'anneau intermédiaire comporte une surface de friction extérieure et une surface de friction intérieure et où la surface de friction extérieure est orientée vers la surface de friction de l'anneau extérieur et la surface de friction intérieure est orientée vers la surface de friction de l'anneau intérieur.

7. Anneau de synchronisation (1) selon l'une quelconque des revendications précédentes, où le corps annulaire (2) est réalisé en une tôle d'acier.

8. Anneau de synchronisation (1) selon l'une quelconque des revendications précédentes, où l'épaisseur de paroi du renflement (11) correspond essentiellement à l'épaisseur de paroi du corps annulaire (2).

9. Anneau de synchronisation (1) selon l'une quelconque des revendications précédentes, où l'épaisseur de paroi du renflement (11) est au maximum le double de la profondeur maximale (18) de l'évidement (10), mesurée en direction radiale.

10. Anneau de synchronisation (1) selon l'une quelconque des revendications précédentes, où la couronne dentée (9) est interrompue dans la zone du renflement (11).

11. Anneau de synchronisation (1) selon l'une quelconque des revendications précédentes, où l'évidement et/ou le renflement s'étendent sur une partie de la largeur de l'anneau de synchronisation.

12. Synchronisation comprenant un anneau de synchronisation (1) selon l'une quelconque des revendications précédentes, ainsi qu'un corps de synchronisation (20), l'anneau de synchronisation(1) étant adapté pour être reçu dans un élément de réception (23) du corps de synchronisation (20) de telle façon que le renflement (11) ou l'évidement (10) du corps annulaire (2) de l'anneau de synchronisation (1) engrène dans l'élément de réception (23) de façon que l'anneau de synchronisation (1) soit accouplé au corps de synchronisation (20).

13. Boîte de vitesses à roues dentées, notamment boîte de vitesses pour un véhicule, comprenant une synchronisation selon la revendication 12, comportant au moins un anneau de synchronisation (1) selon l'une quelconque des revendications 1 à 11.

14. Procédé pour réaliser un anneau de synchronisation (1) selon l'une quelconque des revendications précédentes, comprenant les étapes de former un corps annulaire (2) en forme de pot par emboutissage ou transformation, où une transformation d'au moins une partie du corps annulaire (2) en un évidement (10) et un renflement (11) correspondant est effectuée.
